# EUROPEAN PATENT APPLICATION

(11) **EP 4 825 504 A1**
(43) Date of publication of application: **21.10.2026**
(21) Application number: 26168873.3
(22) Date of filing: 30.03.2026
(51) Int. Cl.: B09B 3/24, B09B 3/32, B09B 3/40, B29B 17/00, B30B 9/30, B30B 15/34, B09B 101/65

(54) **A METHOD AND APPARATUS FOR IMPROVING BIO-SAFETY DURING TRANSPORTION OF WASTE MATERIAL**

(30) Priority: 31.03.2025 AU 2025901065
(71) Applicant: Renewable Composite Technology Pty Ltd, Melbourne, Victoria 3000 (AU)
(72) Inventor: Sanagooy, Mohammad Ali, Melbourne VICTORIA, 3000 (AU)
(74) Representative: Santarelli

(57) **Abstract**

Disclosed herein is a method for encapsulating waste material, the method comprising: (i)depositing a binder composition in a compactor; (ii)depositing one or more flexible containers containing a waste material in the compactor;(iii) heating the binder composition to liquefy the binder composition, and embed the waste material in the liquefied binder composition to form a coated mixture; and (iv) compacting the coated mixture and forming a hydrophobic composite product comprising the waste material.

## Description

### FIELD OF INVENTION

The present invention relates to a method and apparatus for processing waste material.

The present invention relates particularly, although by no means exclusively, to a method of processing co-mingled hazardous waste material into an inert form.

The present invention relates particularly, although by no means exclusively, to a method of encapsulating co-mingled medical waste into an inert form.

### BACKGROUND OF THE INVENTION

The world generates over 2 billion tons of municipal solid waste annually and at least 33% of such waste is not managed in a safe manner. This may lead to air pollution, contamination of water and threat to public health. Particularly in regard to hazardous, toxic or infectious waste derived from the healthcare industry, the risk of infection or injury to the community and harmful leakage to the environment are heightened if medical waste is not managed properly.

Traditionally, hazardous and non-hazardous waste are usually co-mingled and disposed into landfill or open dumps. This is still common practice in some countries.

Most countries now have legislation for safe waste disposal and treatment. Generally, this practice involves categorising and separating the waste so that each type of waste can be processed appropriately. For example, hazardous waste typically requires heat/steam treatment, chemical detoxification (treating waste with chemicals), incineration or encapsulation.

One challenge facing both heat treatment and incineration is the processing of heavy metal contaminated waste. Because heavy metals are usually difficult to volatise, these heavy metals end up entrained in the ash formed from these processes.

It can be appreciated that such ash poses an environmental and health hazard if released into the environment. Accordingly, it would be advantageous to provide a method of rendering such ash inert.

Another challenge relating to incineration is that it is an energy intensive process which often releases harmful chemicals/pollutants.

To mitigate these problems, technologies have been developed to encapsulate the waste material with an inert material. Encapsulants used to coat the waste material presently used in the art include cement, Pozzolanic material (e.g., silicate), clay, wax, polyolefin and urea-formaldehyde.

There are a number of issues with these methods. For example, the cement-based encapsulation method produces a large and heavy final product which can be problematic during transportation. Another disadvantage facing cement-based encapsulation is the formed concrete's intrinsic porosity makes the final product vulnerable to leaching.

At present, urea-formaldehyde is most widely used for encapsulating waste derived from the healthcare industry. However, urea-formaldehyde suffers from brittleness and a tendency to shrink and crack during cooling. Urea-formaldehyde is also not waterproof and is prone to leaching.

US Patent 4,021,363 describes a method of immobilising radioactive particles using a mixture of wax and polyolefin as an encapsulant. One potential drawback of this method is poor coating and thus an unsatisfactory encapsulation.

It is desirable to provide a method and apparatus for encapsulating waste material that alleviates at least one of the mentioned problems.

### SUMMARY OF INVENTION

The present invention is generally directed towards providing a method of encapsulating waste material into an inert form, suitably as a composite product for disposal or to be re-purposed.

The composite product may be leach resistant. The composite product may be leak resistant, suitably leak proof. This reduces the likelihood of hazardous substances being released from the composite product.

Suitably, the composite product may be re-purposed as fuel or building material.

### Method

The present invention provides a method of encapsulating waste material using a binder composition, suitably to form a composite product encapsulating the waste material.

The method may involve the use of a flexible container to hold the waste material. The flexible container may be porous or non-porous.

The waste material may be co-mingled waste.

The waste material may include a mixture of one or more non-hazardous, hazardous, infectious and toxic waste material including contaminated soil. Suitably, the waste material may be medical waste material. The medical waste material may be sourced from hospitals and clinics as well as other healthcare-related facilities. These may include, but are not limited to, dental clinics, general medical clinics, urology and diagnostic laboratories, biological laboratories, blood and sperm donation centres, tattoo studios, veterinary clinics, animal hospitals, and civilian or military medical facilities.

In this specification, the term "medical waste material" refers to waste derived from the healthcare sector, including veterinary care, that may be infectious, biohazardous or toxic.

The waste material may be combustible.

The binder composition may comprise components which are substantially hydrophobic. Suitably, the binder composition forms a composite product that has a hydrophobicity of at least 50%, suitably at least 70%, more suitably at least 90%, even more suitably 100%.

A substantially hydrophobic composition allows the composite product to be at least water resistant, suitably water-proof. This reduces leaching of hazardous substances from the waste material.

The binder composition may be a solid at room temperature.

The binder composition may comprise either or both thermoplastic polymer and wax. Suitably, the binder composition comprises at least 10wt% of at least one thermoplastic polymer and up to 90 wt% wax.

The binder composition may comprise at least 60wt% wax. Suitably, the binder composition comprises wax in the range of 60 wt% to 90 wt%.

The wax may comprise one or more of the following materials: Fischer-Tropsch wax, polyolefin wax, hydrogenated wax, paraffin, beeswax, lanolin, shellac wax, spermaceti, bayberry wax, candelilla wax, carnauba wax, insect wax, castor wax, esparto wax, Japan wax, jojoba oil, ouricury wax, rice bran wax, soy wax, lotus wax, ceresin wax, montan wax, ozocerite, peat wax, microcrystalline wax, petroleum jelly, substituted amide wax, cetyl palmitate, lauryl palmitate, cetostearyl stearate, polyethylene wax, C30-45 Alkyl Methicone, C30-45 olefin or any various hydrocarbons. More suitably, the wax is Fischer-Tropsch wax.

The binder composition may comprise up to 40wt% thermoplastic polymer. Suitably, the thermoplastic composition comprises 10-40 wt% thermoplastic polymer.

The thermoplastic polymer may comprise one or more of the following materials: polyethylene (PE), high-density polyethylene (HDPE), polyvinyl chloride (PVC), polyester terephthalate (PET), polypropylene (PP), and co-polymers thereof.

The binder composition may include additives. Suitably, the binder composition may include additives such as detergent, disinfectant, salt, monopotassium phosphate, magnesium oxide and sulfur. Molten sulfur is particularly suited for mercury containing waste.

The binder composition may be formulated to be one or more of being chemically stable, able to adhere to the waste material, and resistant to biodegradation.

The method may include a step of comminuting the waste material to form a comminuted waste material. Suitably, the comminuting step includes any one of crushing, grinding, milling, cutting, chopping and shredding of the waste material. More suitably, the comminuted waste material is in the form of a powder, suitably a dry powder.

The method may include retaining the waste material in its original form. With this step, comminution of the waste material can be avoided, saving energy and costs.

The method may include mixing a thermoplastic polymer with a wax to form the binder composition.

The thermoplastic polymer of the binder composition may comprise recycled material. Suitably, the thermoplastic polymer substantially comprises waste polymeric material. For example, the thermoplastic polymer may be sourced from the packaging industry and may comprise waste plastic products such as plastic bags. Suitably, the waste plastic products are non-recyclable. This may enable the repurposing of non-recyclable waste material destined for landfill. Another benefit of using thermoplastic polymers for the binder is that they provide a lightweight final product compared to for example a final product formed using cement as a binder.

The method may include providing the binder composition in a particulate form.

The method may involve mixing the waste material with the liquified binder composition to form a coated mixture.

The mixing step may coat the waste material with the binder composition such that the binder composition binds the waste material. Suitably, the binder composition forms a matrix that encapsulates the waste material and any associated hazardous substances.

The method may include forming a final composite product having waste material of up to 80 wt%.

The method may involve producing a composite product that is water and leach resistant.

The method may involve forming a composite product that is recyclable. Suitably, the composite product may be recyclable as a fuel source.

The composite product may be used as a composite building material.

The composite building material may comprise the waste material dispersed in a matrix of thermoplastic polymer and wax, wherein the composite building material comprises from about 60% to about 90% by weight of particulate material, and wherein wax is present in an amount of at least about 25% by weight of the matrix.

The composite building material may comprise the waste material dispersed in a homogenous matrix of thermoplastic polymer and wax.

The composite building material may comprise the waste material dispersed in a heterogeneous matrix of thermoplastic polymer and wax.

The composite building material may comprise the waste material dispersed in a heterogeneous matrix, wherein the heterogeneous matrix comprises particles of a first thermoplastic polymer dispersed in a homogenous matrix of wax and a second thermoplastic polymer having a lower melting point than the first thermoplastic polymer and being capable of forming the homogenous matrix with wax.

In one embodiment, the present invention provides a method of encapsulating waste material using a binder composition comprises:
(i) depositing a waste material into a flexible porous container;
(ii) providing a non-porous vessel for receiving the flexible porous container;
(iii) depositing a binder composition in a non-porous vessel or into the flexible porous container;
(iv) depositing the flexible porous container containing the waste material within the non-porous vessel;
(v) heating the binder composition to liquify the binder composition, and form a coated mixture comprising the waste material embedded in a hydrophobic matrix;
   and
(vi) compressing the coated mixture, and forming a composite product encapsulating the waste material.

Step (i) may include a step of comminuting the waste material to form a comminuted waste material. Suitably, the comminuting step includes any one of crushing, grinding, milling, cutting, chopping and shredding of the waste material. More suitably, the comminuted waste material is in the form of a powder, suitably a dry powder.

Step (i) may include retaining the waste material in its original form.

The method may include mixing a thermoplastic polymer with a wax to form the binder composition for step (iii).

The thermoplastic polymer of the binder composition in step (iii) may comprise recycled material.

Step (iii) may include providing the binder composition in a particulate form. Suitably, the binder composition is in the form of pellets or beads.

The method may include depositing the flexible porous container into a porous vessel. Suitably, the porous vessel is formed of a rigid material. More suitably, the porous vessel is a perforated drum. This allows excess melt to drain from the flexible porous container.

The porous vessel may include perforations formed on a surface of the vessel. Suitably, the porous vessel includes a perforated base.

The porous vessel may be made from metal, composite fibres, polypropylene, wooden, metal reinforced high density polypropylene, metal reinforced silicon or combinations thereof. Suitably, the porous vessel is made from stainless steel.

The porous vessel may be any suitable shape, for example a cylinder, a cuboid, or a frustrum.

Step (iv) may include depositing the flexible porous container into a porous vessel which is nestable within the non-porous vessel. In this embodiment, the porous vessel provides a means to deposit the flexible porous container within the non-porous vessel.

Step (iv) may include contacting the porous vessel with the binder composition in the non-porous vessel.

Suitably, the method includes contacting the porous vessel with the binder composition in the non-porous vessel.

The pores of the flexible container may be sized to allow molten binder composition to drain from the container. Suitably, the container includes sieve holes or mesh with openings of at least 500 microns.

The flexible porous container may be formed of polypropylene (PP), polyethylene (PE), any alternative polymers, any natural fibre or any synthetic fibre. Suitably, the flexible porous container may be a bag. More suitably, the flexible porous container may be a woven or mesh bag.

The flexible porous container may be closeable to contain its contents. Suitably, the container includes a drawstring that enables the container to be closed.

Step (v) may include heating the non-porous vessel to liquify the binder composition to form a molten matrix that coats the waste material. Suitably, the method includes providing a hot plate to heat the non-porous vessel.

Step (v) may involve heating the binder composition such that at least part of the porous vessel submerges into the liquified binder composition to coat the waste material.

The method may involve mechanical mixing of the liquified binder composition and waste material.

Mechanical mixing may involve agitating either or both the non-porous and porous vessels.

The method may include draining excess binder from the porous container. Suitably, the method includes lifting the porous vessel out of the non-porous vessel to drain excess liquified binder from the porous vessel.

The method may include raising the porous vessel within the non-porous vessel and allow draining of excess binder from the porous vessel. This step may involve raising the porous vessel above the liquid level within the non-porous vessel and engaging a mating member of the porous vessel with a corresponding member on the non-porous vessel. This allows the porous vessel to be stacked above the liquid level of the liquefied binder composition within the non-porous vessel.

The method may include compressing the flexible porous container to encapsulate the waste material and remove excess binder composition.

The method may include compressing the flexible porous containers to substantially submerge the flexible porous containers in the binder composition. Suitably, the method includes compressing the flexible porous containers against the porous vessel to compact the flexible porous container and form a layer of the composite product which can provide a substrate on which another flexible porous container may be deposited to form another layer of composite product.

Suitably, the method includes compressing the porous containers in the porous vessel using a manual or automated pusher.

The method may include cooling the compressed flexible porous containers.

The method may include compressing the cooled compressed flexible porous containers to form the final composite product.

The final composite product may form a layer in the porous vessel which can provide a substrate on which more flexible porous containers may be deposited to form another layer of composite product in the porous vessel.

Steps (i) to (vi) may be repeated to produce a multi-layered composite product in the porous vessel.

In a further embodiment, the present invention provides a method for encapsulating waste material comprising:
(i) depositing a binder composition in a compactor;
(ii) depositing one or more flexible containers containing a waste material in the compactor;
(iii) heating the binder composition to liquefy the binder composition, and embed the waste material in the liquefied binder composition to form a coated mixture; and
(iv) compacting the coated mixture and forming a hydrophobic composite product comprising the waste material.

At least one of the flexible containers may be non-porous. Suitably, all the flexible containers are non-porous.

The thermoplastic polymer of the binder composition in step (i) may comprise recycled material. Step (i) may include providing the binder composition in a particulate form.

Step (ii) may include retaining the waste material in its original form.

The waste material may be provided by the above industries or facilities in flexible containers. For example, the waste material may be delivered in plastic bags to a processing facility wherein the waste material is processed to form the hydrophobic composite product.

Step (ii) may involve depositing one or more flexible containers, each containing the waste material into the compactor.

Once deposited into the compactor, the method may include opening the one or more flexible containers to release the waste material prior to step (iii). For example, the one or more flexible containers may be cut using a cutter, suitably a loop-wire saw cutter. This facilitates the release of loose waste material in the compactor, and enables more efficient encapsulation of the waste material with the binder composition.

The flexible container may be formed of polypropylene (PP), polyethylene (PE) or any alternative polymers. Suitably, the flexible container may be a bag. More suitably, the flexible container is a plastic bag.

The flexible container may be closeable to contain its contents. Suitably, the flexible container includes a drawstring that enables the flexible container to be closed.

The method may include depositing the binder composition and the one or more flexible containers containing the waste material through an inlet of the compactor. Suitably, the method includes depositing the binder composition and the one or more flexible containers containing the waste material through a chute on a top surface of the compactor. More suitably, the method includes pivotally opening a lid of the chute to deposit the binder composition and the one or more flexible containers containing the waste material, and pivotally closing the lid of the chute after step (ii).

Step (iii) may include heating the binder composition to liquefy the binder composition to form a molten matrix that coats the waste material. Suitably, the method includes providing a hot plate, an electric band heater or any other suitable heating device in the compactor that can be activated to heat and liquefy the binder composition.

Step (iii) may involve heating the binder composition such that at least part of the waste material, and suitably the flexible containers, become submerged in the liquefied binder composition.

The method may involve applying mechanical vibration to the liquified binder composition to enhance the coating of the waste material. For example, vibration may be provided through mechanical oscillation or by using a piezoelectric vibration source.

The method may include dispersing the liquefied binder composition in the compactor to enhance the coating of the waste material. For example, the compactor may be provided with a sprayer, or any other suitable dispersion device to improve distribution of the liquefied binder composition on the waste material. This may facilitate efficient coating of the waste material and any flexible containers with the binder composition such that the waste material becomes embedded within the liquefied binder composition. Suitably, embedding the waste material in the liquefied binder composition forms a coated mixture. More suitably, the coated mixture comprises the waste material embedded in a hydrophobic matrix.

Step (iv) may include compressing the coated mixture to form the composite product. Suitably, step (iv) includes compressing the coated mixture using a manual or automated press. In some embodiments, the press is a ram comprises a scissor-arm mechanism. The scissor-arm mechanism may be actuated by a hydraulic jack to extend and retract along the length of the compactor.

During the compressing step, extension of the scissor-arm mechanism may drive the press and push the waste material against a wall of the compactor to compact the coated mixture, while retraction of the scissor-arm mechanism may withdraw the press. This compression cycle may be repeated as required.

The method may include cooling the coated mixture, suitably after it has been compressed.

The method may include repeatedly compressing the coated mixture, suitably the cooled compressed coated mixture, to form the hydrophobic composite product.

The method may include ejecting the hydrophobic composite product out of the compactor via an outlet. Suitably, the method includes extruding the hydrophobic composite product from the compactor. For example, the composite product is extruded from the compactor by the press. Suitably, the press is actuated by the scissor-arm mechanism when the outlet is in an open orientation to eject the composite product.

The opening of the outlet of the compactor may be automated to open in response to a signal from a sensor when a predetermined compaction level is reached.

The method may include cutting the extruded composite product. Suitably, the extruded composite may be cut using any suitable cutting device, such as a rotating saw or a laser cutter.

### Apparatus

The present invention also provides an apparatus for encapsulating waste material using the previously described methods, suitably to form a composite product encapsulating the waste material.

The apparatus generally comprises a flexible container for receiving the waste material and binder composition, a heater for liquefying the binder composition and coating the waste material and liquefied binder composition, and a press for compressing the waste material and the binder composition to form a composite product.

The apparatus may include a disposal unit for receiving waste material for supplying to the flexible container(s). For example, a disposal unit may be a biohazard bin used in the healthcare industry in accordance with the regulatory requirements.

The apparatus may include a comminutor for comminuting the waste material. Suitably, the comminutor is configured to crush, mill, grind, cut, chop and shred the waste material prior to being placed in the flexible container or being coated with the binder composition. More suitably, the comminutor is a crusher or a grinder.

In one embodiment, the apparatus for encapsulating waste material comprises:
(i) a flexible porous container for receiving a waste material;
(ii) a non-porous vessel for receiving the flexible porous container containing the waste material, wherein either the one or more flexible porous containers or the non-porous vessel is also configured to receive a binder composition for encapsulating the waste material;
(iii) a heater for liquifying the binder composition, and forming a hydrophobic matrix to coat the waste material; and
(iv) a press to compress the waste material and the binder composition to form a composite product encapsulating the waste material.

The flexible porous container may be a mesh bag.

The apparatus may include a porous vessel for receiving the flexible porous container.

The porous vessel may be formed of a rigid material. More suitably, the porous vessel is a perforated drum. The perforations allow excess molten binder to drain from the vessel.

The porous vessel may include perforations formed on a surface of the vessel. Suitably, the porous vessel includes a perforated base. More suitably, the porous vessel includes a perforated base and side wall.

The porous vessel may be made from metal, composite fibres, polypropylene, wooden, metal reinforced high density polypropylene, metal reinforced silicon or combinations thereof. Suitably, the porous vessel is made from stainless steel.

The porous vessel may be nestable within the non-porous vessel.

The porous vessel may include at least one mating member that is engageable with a corresponding member on the non-porous vessel. Suitably, the mating member(s) of the porous and non-porous vessels enables the porous vessel to rest within the porous vessel at at least two levels. This allows the porous vessel to be elevated above the liquefied binder within the non-porous vessel to drain excess binder from the flexible porous container. More suitably, the at least one mating member on the porous vessel may be a ledge or lip that is engageable with a step on an inner surface of the non-porous vessel.

The porous vessel may be any suitable shape, for example a cylinder, a cuboid, or a frustrum.

The heater may directly contact the non-porous vessel. Suitably, the hot plate is positioned under the porous and non-porous vessels.

The heater may be an electric hotplate.

The apparatus may include a mixer to mix the waste material with the binder composition.

The mixer may be any mixing means known in the art. A suitable mixer may be a single screw or a twin screw extruder.

The press may be used to compress the flexible porous container inside the porous vessel.

The press may be used to compress the mixture inside the porous vessel when the porous vessel is lifted out of the non-porous vessel.

The press may be any press known in the art. Suitably, the press is a manual pusher, an automated pusher or a hydraulic press.

The apparatus may include a mould to shape the binder composition and waste material mixture into the composite product. Suitably, the composite product is formed once heat from the melt has dissipated and the mixture has cooled.

In another embodiment, the present invention provides a compactor for encapsulating waste material, the compactor comprises:
(i) an inlet for receiving a binder composition and one or more flexible containers containing the waste material;
(ii) a heater for liquefying the binder composition and embedding the waste material in the liquefied binder composition to form a coated mixture; and
(iii) a press to compress the coated mixture to form a hydrophobic composite product.

The flexible container may be formed of polypropylene (PP), polyethylene (PE) or any alternative polymers. Suitably, the flexible container may be a bag. More suitably, the flexible container is a plastic bag.

The flexible container may be closeable to contain the waste material. Suitably, the flexible container includes a drawstring that enables the flexible container to be closed.

The compactor may be formed of a rigid material. Suitably, the compactor is made from metal, composite fibres, polypropylene, metal reinforced high density polypropylene, metal reinforced silicon or combinations thereof. Suitably, the compactor is made from stainless steel.

The compactor may be any suitable shape. Suitably, the compactor is elongate, having a generally rectangular body.

The inlet may be in the form of a chute located at a top surface of the compactor. Suitably, the chute includes a lid which may be opened to deliver the waste material into the compactor.

The inlet may be located at a central location on the compactor. This enables the binder composition and the flexible containers containing the waste material to be delivered in the middle of the compactor.

The compactor may include a cutter, suitably a wire-based cutter, configured to open the flexible container deposited into the compactor. Suitably, the cutter comprises a wire saw. The wire saw may be a continuous loop guided by a pulley arrangement. This releases the waste material from the flexible container and cuts the flexible container(s) into smaller pieces to enable more efficient encapsulation of the waste material by the binder composition.

The compactor may be configured to receive the binder composition in particulate form. Alternatively, the compactor may be configured to receive the binder composition in liquid form.

The heater may directly contact the binder composition. Suitably, the heater is positioned centrally in the compactor. More suitably, the heater is positioned at the base of the compactor.

The heater may be an electric hotplate, an electric band heater or any suitable heater known in the art.

The apparatus may include a mixer configured to enhance the coating of the waste material with the binder composition. Suitably, the mixer is configured to apply mechanical vibration to the liquefied binder composition. For example, the mixer may be a mechanical vibrator, a piezoelectric vibration source or any suitable mixing device known in the art.

The mixer may be located in a central portion of the compactor.

The apparatus may include a sprayer configured to enhance the coating of the waste material with the binder composition. Suitably, the sprayer is configured to disperse the liquefied binder composition onto the waste material.

The sprayer may be centrally located in the compactor.

The mixer or the sprayer improves coating of the waste material and any flexible containers with the binder composition such that the waste material becomes embedded within the liquefied binder composition to form a coated mixture. Suitably, the coated mixture comprises the waste material embedded in a hydrophobic matrix.

The press may be used to compress the waste material embedded in the hydrophobic matrix.

The press may be any press known in the art. Suitably, the press is a manual pusher, an automated pusher or a hydraulic press. More suitably, the press is a ram actuated by a suitable hydraulic drive system. For example, the press is a ram, suitably including a scissor-arm mechanism actuated by a hydraulic jack. The scissor-arm mechanism may be configured to extend and retract the ram.

The compactor may be advantageously designed to facilitate efficient embedding of the waste material within the binder composition during compression.

The compactor may include a wall against which the coated mixture is compressed.

The compactor may include a cooler. Suitably, the cooler is configured to cool or extract heat from the compressed coated mixture to form the hydrophobic composite product. Any suitable cooling device known in the art may be used.

The compactor includes an outlet from which the hydrophobic composite product may be ejected from the compactor.

The press may be used to extrude the final hydrophobic composite product from the compactor. For example, the composite product is extruded from the compactor by the extending the ram along the length of the compactor towards the outlet.

The outlet may include a door, suitably hinged along one side, to allow the composite product to be ejected from the compactor.

It is understood that the outlet may be configured in various sizes and geometries depending on the desired size and geometry of the final composite product.

The compactor may include a sensor configured to automatically open the door of the outlet when a predetermined compaction level is reached.

The compactor may include a cutter configured to cut the extruded composite product. The cutter may be any suitable cutting device, such as a rotating saw, a blade or a laser cutter.

### BRIEF DESCRIPTION OF DRAWINGS

Preferred embodiments of the present invention is hereinafter described by way of example only, with reference to the accompanying Figures, wherein:
Figure 1 is a cross-sectional view of the apparatus in accordance with a first embodiment of the present invention.
Figure 2 is a cross-sectional view of the apparatus of Figure 1, with the flexible porous container filled with a coated mixture comprising the waste material embedded in a hydrophobic matrix.
Figure 3 is a cross-sectional view of the apparatus in accordance with a second embodiment of the present invention illustrating a multi-layered composite product. The reference numerals used in Figure 3 is based on the naming convention used for Figures 1 and 2 with a "5" prefix (e.g. the non-porous vessel in Figure 3 is labelled 520 whereas the same feature is labelled 20 in Figures 1 and 2).
Figure 4 is a cross-sectional view of the apparatus in Figure 3 illustrating the draining of excess binder from the flexible porous container into the non-porous vessel.
Figure 5 is a process flow diagram of a method of encapsulating co-mingled waste material using the apparatus illustrated in Figure 1.
Figure 6 is a perspective view of a compactor in accordance with an embodiment of the present invention.
Figure 7 is a side view of the compactor in Figure 6.
Figure 8a is a top view of the compactor in Figure 6.
Figure 8b is an end view of the compactor in Figure 6.
Figure 9 is a cross-sectional perspective view of the compactor in Figure 6.
Figure 10 is a cross-sectional side view of the compactor according to an embodiment of the present invention illustrating the deposition of bagged waste material in the compactor.
Figure 11 is a cross-sectional side view of the compactor in Figure 10 illustrating the compressing of the waste material and liquefied binder composition. Details of the scissor-arm mechanism has been omitted for clarity.
Figure 12 is a cross-sectional side view of the compactor in Figure 10 illustrating the ejection of the composite product. Details of the scissor-arm mechanism has been omitted for clarity.

### DETAILED DESCRIPTION

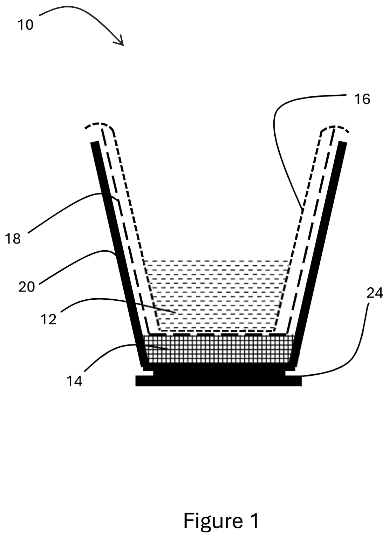

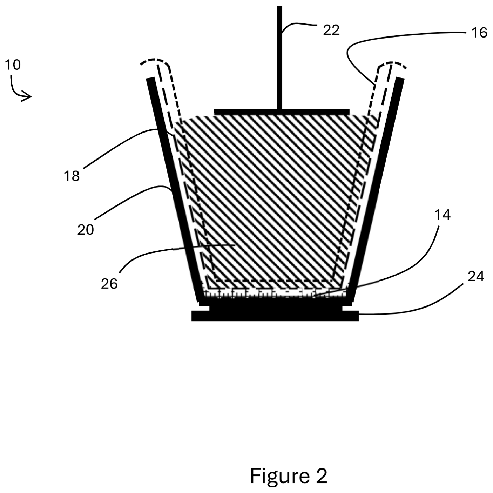

Figures 1 and 2 illustrate an apparatus for encapsulating waste material in accordance with one embodiment of the present invention. The apparatus 10 comprises a flexible porous container 16, a perforated stainless steel drum 18, a non-perforated stainless steel drum 20, a heater 24 and a press 22.

The perforated stainless steel drum 18 is placed inside the slightly larger non-perforated stainless steel drum 20 in a nested configuration. The volume of the perforated stainless steel drum 18 and the non-perforated stainless steel drum 20 can be adjusted in accordance with the desired volume of the waste material 12 to be encapsulated. The drums 16, 18 may take the shape of a frustrum of a cone or a cylinder. The perforated stainless steel drum 18 receives a solid binder composition 14 comprising of a mixture of wax and thermoplastic polymer suitably sourced from waste plastic. The binder 14 is suitably in the form of pellets or beads.

As shown in Figure 1, a porous container in the form of a polypropylene woven mesh bag 16 is placed inside the perforated stainless steel drum 20 on top of the solid binder 14, configured to receive waste material 12.

The number of mesh bags 16 deposited inside the stainless steel drum 18 may vary, dependent on the amount of waste material 12 to be deposited.

Figure 2 illustrates the apparatus of Figure 1 including a mechanical press 22 for mixing and compacting the binder coated waste material 12 inside the mesh bag 16. An electrical hotplate 24 is located underneath the non-perforated stainless steel drum 20 to heat and liquify the binder composition 14 in the stainless steel drum 20. As the binder 14 melts, the waste material 12 (inside the mesh bag 16) gradually submerges in the binder melt 14 as the porous vessel 18 is lowered into the melting binder. This provides an efficient method for encapsulating and rendering inert hazardous material in the waste material 12.

The perforated stainless steel drum 18 has holes on the side wall and base of the drum to allow any excess binder melt 14 to drain from the perforated stainless steel drum 18 into the non-perforated stainless steel drum 20.

This can be achieved by raising the perforated stainless steel drum 18 above the liquid level of the liquified binder 14. The manual press 22 is used to compress the mixture 26 inside the perforated stainless steel drum 18 to remove excess binder and form the final composite product 32. Another benefit of using the press 22 is the optimization of the amount of binder 14 required to achieve efficient encapsulation of the waste material.

In accordance with the second embodiment of the present invention, the porous vessel 518 is provided with mating members on an outer side wall that is configured to engage corresponding members on an inner side wall of the non-porous vessel 520.

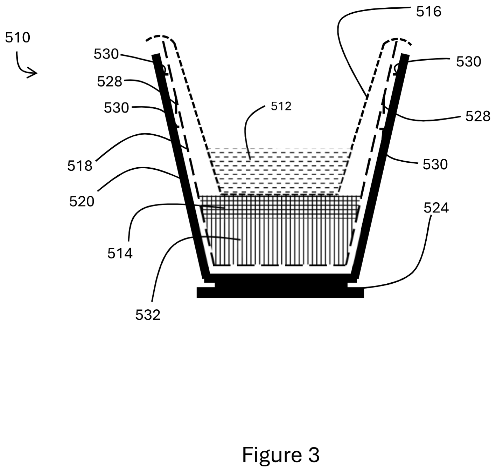

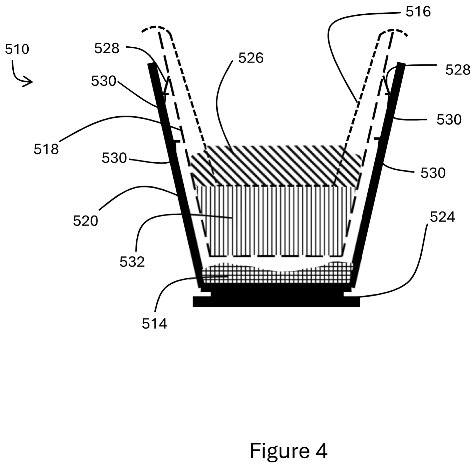

This embodiment is illustrated in Figures 3 and 4. In these figures, the perforated stainless steel drum 518 is provided with a pair of lips 528 that extend outward from the outer surface of the side wall and the non-perforated stainless steel drum 520 is provided with a plurality of projecting steps 530 on its inner wall for engaging the lips. Resting the lips 528 against the steps allows the porous vessel 518 to be nested in an elevated position within the non-porous vessel 520 to drain excess binder 514 into the non-perforated stainless steel drum 520. A benefit of this arrangement is that the manual handling required by a user (not shown) during the draining step is minimised.

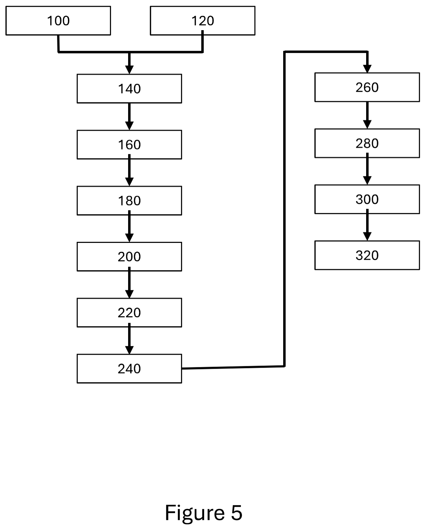

A method of operating the apparatus 510 for encapsulating co-mingled medical waste material according to the present invention is shown in Figure 5. It can be appreciated that whilst this example focuses on medical waste material, the method is also suitable for processing other types of waste material.

The first step of the method involves recovering the co-mingled medical waste 100 derived from the healthcare industry comprises non-hazardous waste and hazardous waste which may include, *inter alia,* infectious waste, toxic waste, pathological waste, sharps and chemicals such as spent syringes, bandages, diapers and scalpels. Suitable sources of the waste material include hospitals and clinics.

Waste material from a typical hospital comprises up to 15% heavy metals, which may be leachable and cause contamination. It follows that there are significant costs and contamination risks during transportation of such waste material over long distances for disposal.

Beneficially, the present invention processes co-mingled waste material and does not require the waste material to be separated before being processed.

The co-mingled medical waste material is stored in a skip or any other suitable storage facility before being processed according to the invention.

The waste material may be subjected to a crushing and/or grinding step to reduce its size but is preferably stored without being comminuted.

The method also includes a step of providing a binder composition 120 comprising of a mixture of wax and thermoplastic polymers sourced from waste plastic.

The waste plastic may be sourced from the packaging industry and may substantially comprise waste labels and backing liners.

The binder composition 514 is controlled to comprise about 10-40 wt% of high-density polyethylene (HDPE). The binder composition is further controlled such that it comprises about 60-90 wt% Fischer-Tropsch wax.

The binder composition 514 is suitably in particulate form, and may be powdered or pelletised, to allow the composition to be more easily distributed throughout the medical waste material when mixed. In this respect, the waste plastic may itself be processed by comminution and/or melting into a granular form.

The binder composition 514 is placed inside the non-perforated stainless steel drum 520 in step 140. A perforated stainless steel drum 518 having a perforated base and side wall is placed in the non-perforated stainless steel drum 520 and rests on the binder composition 514 in step 160.

A polypropylene woven mesh bag 516 is subsequently placed inside the perforated stainless steel drum 518 in step 180.

The mesh bag 516 is filled with medical waste material 512 in step 200 to an appropriate level.

In the next step 220, the heating plate 524 is activated to heat stainless steel drum 520 to cause the binder composition 514 to melt and form a molten matrix that coats the medical waste material 512.

The operating parameters such as the heating temperature may be modified to homogenise the thermoplastic polymer and the wax in the binder composition.

As the binder melts, the perforated stainless steel drum 520 sinks into the liquified binder 514 to encapsulate the waste material 512.

The contents of the mesh bag 516 can be mixed more evenly by agitating the perforated stainless steel drum 518 or the mesh bag 516 in the drum 518 in step 240. This ensures that the binder composition 514 contacts and ultimately coats a substantial portion of the medical waste material 512.

One benefit of mixing the waste material with the molten binder composition 514 is the vaporisation/evaporation of water entrained in the medical waste material 512. This avoids the need to pre-treat the medical waste material to remove moisture, for example by heating which can be energy intensive, time consuming and costly.

In the next step 260, the perforated stainless steel drum 518 is lifted out of the non-perforated stainless steel drum 520 to allow excess binder composition 514 (i.e. melt) to drain from the perforated stainless steel drum 518 under gravity. This is best shown in Figure 4 wherein the lips 528 of the perforated stainless steel drum 518 sits on the steps 530 of the non-perforated stainless steel drum 520. This design allows for a multi-layered setup, with the perforated stainless steel drum 518 fitting neatly inside the non-perforated stainless steel drum 520 to catch any residue or melt 514, while maintaining separation between the layers. The drained molten binder composition 514 is captured in the non-perforated stainless steel drum 520 and may be recycled and reused.

Thereafter, in step 280, the mesh bag 516 containing the slurry of medical waste material 512 and liquified binder 514 are compressed against the bottom of the perforated stainless steel drum 518 using a manual pusher 522. This submerges the mesh bags 516 in the molten binder 514 and encapsulates the medical waste material 512.

The compressing step 280 also reduces the volume of the medical waste material 512 and enables the medical waste material 512 to be encapsulated in less molten binder 514.

This obviates the need for a separate comminution step, which is energy intensive, time consuming and costly, to crush and/or grind the waste material.

Compression step 280 can also expel moisture or other fluids from the waste material 512.

After compressing, a cooling step 300 is performed to cool the composite product 532, being encapsulated waste material. It will be understood by the skilled addressee that a cooling device such as a blower may be used to increase cooling of the composite product 532. This forms a leak and leach resistant composite product 532 in which hazardous substances such as viruses, bacteria and mould are bonded and encased within the melt 514.

The cooled and compressed product 532 may be subjected to a further compression step 320 to form the final composite product 532. In this step 320, the composite product 532 is placed inside a plastic bag, for example a medically-approved bag for storing medical waste material, and compressed in a mould to form a final product having a desired product shape.

The steps of the method can be repeated as required to form a multi-layered composite product as illustrated for example in Figures 3 and 4. For example, a fresh batch of solid binder 514 may be deposited on top of the first final composite product 532. An additional mesh bag 516 may be placed inside the perforated stainless steel drum 518 for waste material 512 to be deposited therein.

The final multi-layered composite product is then transported to a target destination for example to be incinerated or re-purposed. Suitable uses of the composite product include being used as a seed material to produce a polymer or a wax. The encapsulated composite product may also be recycled as a fuel source if the composite product is substantially made of combustible materials.

Accordingly, this example of the present invention provides a method for encapsulating and immobilizing waste material to form an inert composite product that is resistant to leaking and leaching of hazardous substances when the composite product is exposed to weather elements including rain.

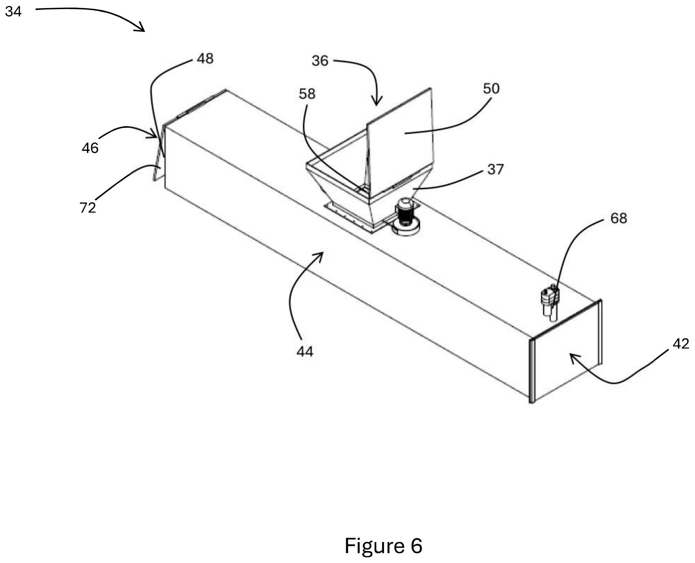

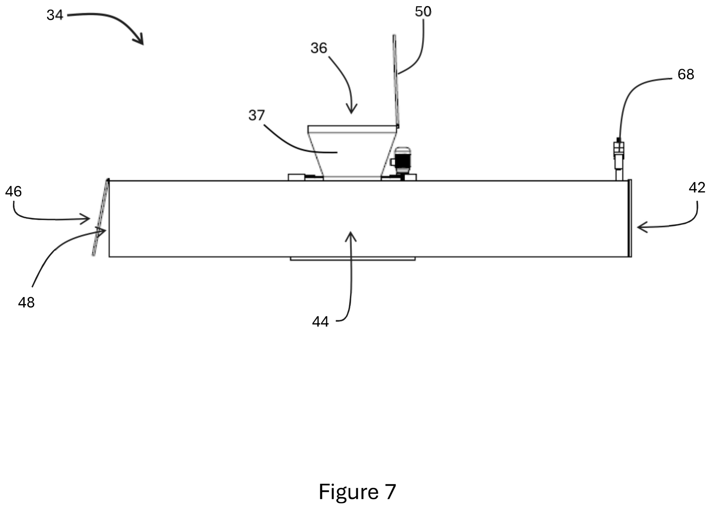

Figures 6 to 9 illustrate an apparatus for encapsulating waste material in accordance with another embodiment of the present invention.

The apparatus is in the form of a compactor comprising an inlet 36, a heater 38 and a press 40. The compactor 34, made from stainless steel, and has a generally rectangular body with a central portion 44 located between a first end 42 and a second end 46. The inlet 36 is positioned at the top of the compactor 34 and an outlet 48 is positioned at the second end 46 of the compactor. A hopper 37 is located on top of the inlet 36.

A lid 50 is hinged along one side of the hopper 37 to allow the lid 50 to be pivotally opened or closed.

A binder composition 52 in particulate form is fed into the compactor 34 through the hopper 37.

The binder composition 52 comprises a mixture of wax and waste plastic comprising predominately of thermoplastic polymers. The binder composition 52 is controlled to about 10-40 wt% of high-density polyethylene (HDPE) and about 60-90 wt% Fischer-Tropsch wax.

Waste material 56 is contained in a flexible container in the form of a plastic bag 54. The plastic bag is usually tied up or closed with a drawstring to retain the waste material 56. The bagged waste material 56 may be sourced from healthcare-related facilities such as hospitals and clinics, and may be delivered onsite for processing by the present invention.

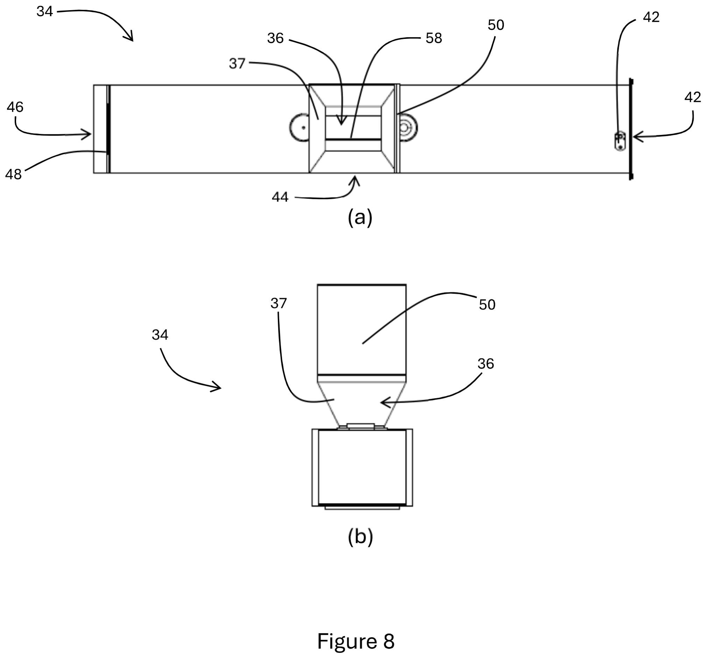

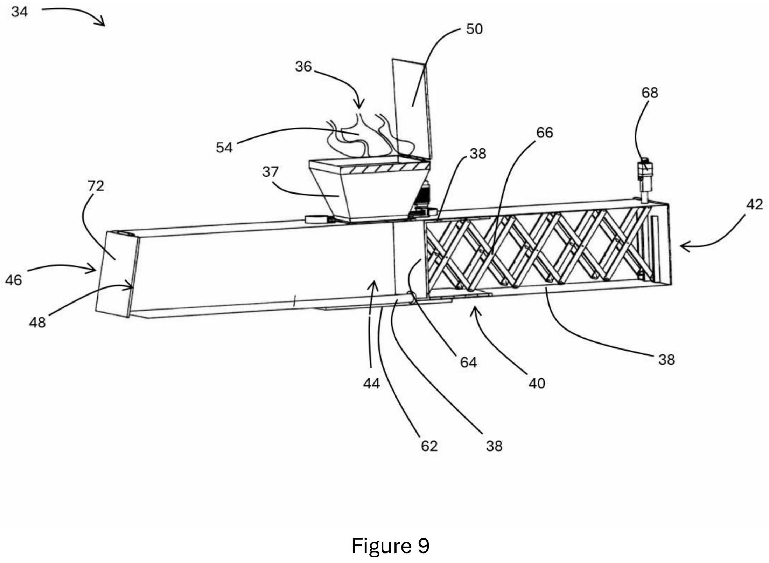

As shown in Figures 8 and 9, these plastic bags 54 containing waste material 56 are deposited into the hopper 37.

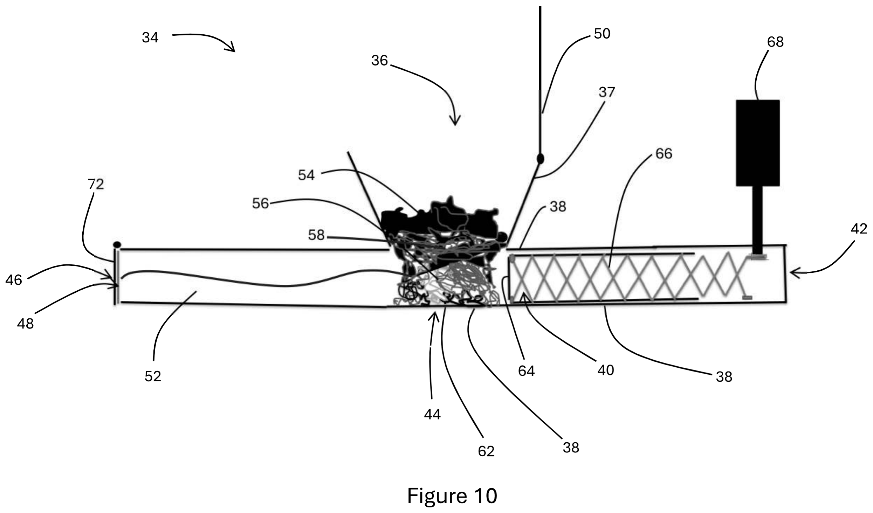

Referring to Figure 10, as the plastic bags 54 containing waste material 56 go through the hopper 37 to be dropped the central portion 44 of the compactor 34, a continuous loop wire saw 58 cuts the plastic bags 54 to release the loose waste material 58 into the compactor 34.

Heater 38 is activated once the compactor 34 is filled with an appropriate level of the binder composition 52 and the waste material 56. The heater 38 melts the binder composition 52 to form a molten matrix that coats the waste material 56.

The heater/s may be in the form of hot plates or electric band heaters installed in the central portion 44 and the first end 42 of the compactor 34.

The operating parameters such as the heating temperature may be adjusted to ensure that the thermoplastic polymer and the wax in the binder composition 52 are homogenised.

As the binder composition 52 is liquefied, at least a part of the waste material 56 and the cut plastic bags 54 contact the binder composition 52.

The contents of the waste material 56 and the cut plastic bags 54 can be mixed more evenly by agitating and vibrating the central portion 44 of the compactor 34 using a mixer 62. The mixer may be a mechanical vibrator, a piezoelectric vibration source or any suitable mixing device known in the art. This ensures that the binder composition 52 embeds a substantial portion of the waste material 56 to ultimately form a coated mixture 60.

Thereafter, the coated waste material 56 is compressed against the wall at the second end 46 of the compactor 34 using a ram 64. The ram is actuated by a scissor-arm mechanism 66 driven by a hydraulic jack 68. The scissor mechanism is best shown in Figures 9 and 10.

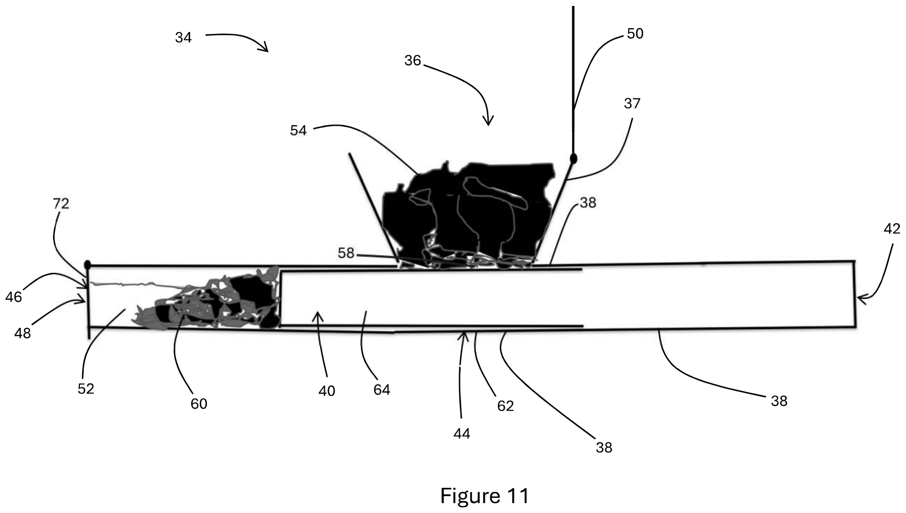

Figure 11 illustrates the compacting of the coated waste material 56 using the ram 64.

As the ram 64 pushes the coated mixture, it causes the waste material 56 to be further submerged in the liquefied binder composition 52. This improves embedding of the waste material 56 within the binder composition 52.

The compressed coated mixture produced in the compactor 34 is allowed to cool to form the hydrophobic composite product. A cooling device may be used to accelerate the reduction in temperature at the second end 46 of the compactor 34. Suitably, the second end 46 operates at ambient temperature.

The cooled and compressed composite product may repeatedly compressed using the ram 64 to form the final composite product. During such compression steps, the outlet 48 is maintained in a closed orientation to ensure that the composite product is retained within the compactor.

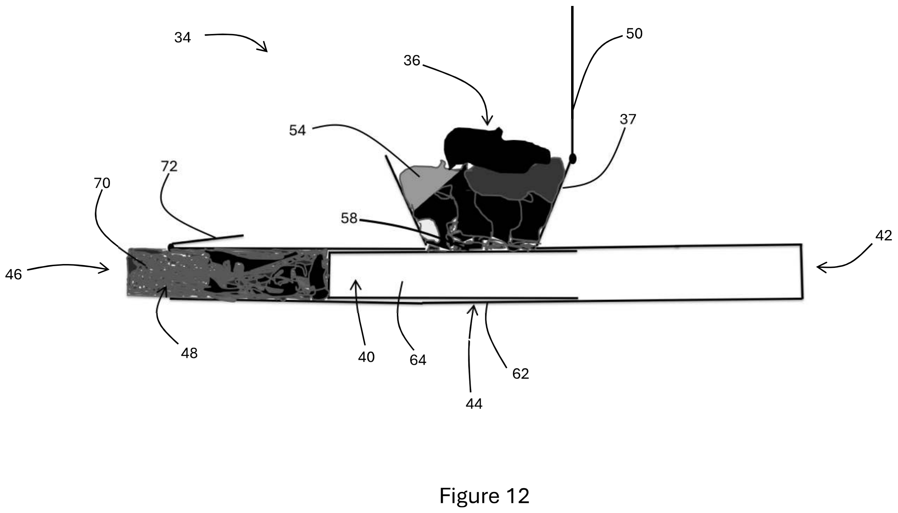

Once a desired level of compaction has been achieved, the final hydrophobic composite product 70 is extruded through the outlet 48 (see Figure 12).

The outlet 48 includes a hinged door 72 which allows the outlet 48 being movable between the open and closed orientations.

The door 72 of the outlet 48 may automatically open when a sensor detects that a predetermined compaction level has been reached to eject the composite product.

The hydrophobic composite product 70 may be extruded from the compactor 34 and cut into a desired shape and length before being delivered to a target location or customer.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It will be understood to persons skilled in the art of the invention that many modifications may be made without departing from the spirit and scope of the invention.

## Claims

1. A method for encapsulating waste material, the method comprising:
(i) depositing a binder composition in a compactor;
(ii) depositing one or more flexible containers containing a waste material in the compactor;
(iii) heating the binder composition to liquefy the binder composition, and embed the waste material in the liquefied binder composition to form a coated mixture; and
(iv) compacting the coated mixture and forming a hydrophobic composite product comprising the waste material.

2. The method as claimed in claim 1, wherein at least one of the flexible containers is non-porous.

3. The method as claimed in either claim 1 or 2, including providing a binder composition comprising up to 40wt% thermoplastic polymer.

4. The method as claimed in any one of the preceding claims, including mixing a thermoplastic polymer with a wax to form the binder composition.

5. The method as claimed in any one of the preceding claims, wherein step (ii) includes cutting the one or more flexible containers to release the waste material.

6. The method as claimed in any one of the preceding claims, wherein step (iv) includes compressing the coated mixture using a press that extends and retracts along a length of the compactor.

7. The method as claimed in any one of the preceding claims, including extruding the hydrophobic composite product from the compactor.

8. The method as claimed in claim 7, including cutting the extruded hydrophobic composite product.

9. A compactor for encapsulating waste material comprising:
(i) an inlet for receiving a binder composition and one or more flexible containers containing the waste material;
(ii) a heater for liquefying the binder composition and embedding the waste material in the liquefied binder composition to form a coated mixture; and
(iii) a press to compress the coated mixture to form a hydrophobic composite product.

10. The apparatus as claimed in claim 9, wherein a chute is located at the inlet at a top surface of the compactor.

11. The apparatus as claimed in claim 9 or claim 10, comprising a wire-based cutter configured to cut the one or more flexible containers.

12. The apparatus as claimed in any one of claims 9 to 11, wherein the press is configured to extend and retract along a length of the compactor.

13. The apparatus as claimed in any one of claims 9 to 12, including a cooler to cool the coated mixture after it has been compressed.

14. The apparatus as claimed in any one of claims 9 to 13, wherein the press is configured to extrude the hydrophobic composite product from the compactor.

15. The apparatus as claimed in claim 14, including a cutter for cutting the extruded hydrophobic composite product.
